# EUROPEAN PATENT APPLICATION

(11) **EP 2 781 581 A1**
(43) Date of publication of application: **24.09.2014**
(21) Application number: 13160322.7
(22) Date of filing: 21.03.2013
(51) Int. Cl.: C10G 33/04, B01D 17/04, C09K 8/584, C09K 8/60

(54) **Composition and process for demulsifying oil/water emulsions**

(71) Applicant: Shell Internationale Research Maatschappij B.V., 2596 HR The Hague (NL)
(72) Inventor: Barnes, Julian Richard, 1031 HW Amsterdam (NL); Groen, Khrystyna, 1031 HW Amsterdam (NL); Raney, Kirk Herbert, Houston, Texas 77094 (US); Smit, Jasper Roelf, 1031 HW Amsterdam (NL)
(74) Representative: Matthezing, Robert Maarten

(57) **Abstract**

The invention relates to a composition for demulsifying an emulsion which comprises oil and water (oil/water emulsion), the composition comprising a salt of formula (I) [R¹R²R³R⁴A⁺]ₘ[Xⁿ⁻], wherein [R¹R²R³R⁴A⁺] represents a cation; A is nitrogen or phosphorus; R¹, R², R³ and R⁴ may be the same or different and each of R¹, R², R³ and R⁴ is a hydrocarbyl group containing 6 to 26 carbon atoms; [X⁻] represents an anion; and m = n = 1, 2 or 3. Further, the invention relates to a process for demulsifying an oil/water emulsion comprising contacting the emulsion with said salt of formula (I). Still further, the invention relates to a method of recovering crude oil from a crude oil containing formation wherein said salt of formula (I) is also used as a demulsifier for the oil/water emulsion recovered from said formation.

## Description

### Field of the invention

The present invention relates to a composition and process for demulsifying an emulsion which comprises oil and water (an oil/water emulsion).

### Background of the invention

Crude oil produced from production wells often forms emulsions with water present in the process. Oil/water emulsions are also formed when secondary and tertiary oil recovery methods are used to enhance the oil recovery from a well. These methods may involve injecting brine, surfactants, alkaline agents and/or polymers into the reservoir. These injected compounds often promote formation of oil/water emulsions.

However, these oil/water emulsions are difficult to process and separate. For these emulsions can create high pressure drops in flow lines and may even cause trips or upsets in crude oil handling facilities. Additionally, it is more economical to separate these emulsions so that crude oil having reduced water content is recovered, while at the same time brine, surfactants and/or other compounds can be recycled and re-injected into the formation.

It is known to add quaternary ammonium salts to oil/water emulsions in order to demulsify these. For example, US2050924 concerns a process for breaking petroleum emulsions of the water-in-oil type, which consists in subjecting the emulsion to the action of a water-soluble, cation-active, surface-active substance of the formula type [Z-N(A)₃]X, in which Z represents any aliphatic hydrocarbon radical having at least 8 and not more than 26 carbon atoms; A represents a substituent radical to replace a hydrogen atom of the ammonium radical, and may be a methyl radical, ethyl radical, etc., or AAA may be replaced by a single trivalent radical, such as a pyridine, picoline, or quinoline residue, and X represents a non-surface-active negative radical or component. Specific alkyl groups for A in said substance of formula [Z-N(A)₃]X disclosed in US2050924 are hexadecyl, stearyl, octyl, oleyl, lauryl and palmityl. Specific substances as disclosed are trimethyl copryl ammonium chloride, trimethyl cetyl ammonium chloride, trimethyl stearyl ammonium chloride, trimethyl duodecyl ammonium chloride, and trimethyl lauryl ammonium chloride. According to US2050924, it is most desirable that in said substance of formula [Z-N(A)₃]X, AAA is replaced by pyridine, resulting in a pyridinium compound wherein the nitrogen atom of the pyridine ring is substituted by the Z radical.

Further, US4374734 relates to a process for recovering crude oil from an oil-in-water emulsion comprising crude oil, water and sufficient petroleum sulfonate surface active agents with an equivalent weight range of 350 to 500 to stabilize said emulsion. In said process, a quaternary ammonium surfactant compound with a molecular weight of 200 to 700 is added to said stabilized emulsion in order to break it. In US4374734, said quaternary ammonium surfactant compound is further described as a quaternary ammonium halide. Suitable compounds would include coco trimethyl ammonium chloride, hexadecyl trimethyl ammonium chloride, dicoco dimethyl ammonium chloride, methylenebis(2-hydroxyethyl) coco ammonium chloride, coco imidazoline benzyl chloride, diocytl dimethyl ammonium chloride, didecyl dimethyl ammonium chloride, diisobutylphenoxyethyl dimethyl benzyl ammonium chloride, and diisobutylcresoxyethoxyethyl dimethyl benzyl ammonium chloride. US4374734 discloses that alkyl dimethyl benzyl ammonium chlorides, dialkyl dimethyl ammonium chlorides, alkyl trimethyl ammonium chlorides and imidazolinium chlorides should work well.

Further, US2011247966 (Nalco Company) discloses a method of demulsifying an emulsion comprising oil and water, the method comprising: adding a composition to the emulsion, wherein the composition comprises a cationic alkyl ammonium halide surfactant or an amphoteric surfactant. Said cationic alkyl ammonium halide surfactant may comprise an alkyl trimethyl ammonium halide, an alkyl dimethyl benzyl ammonium halide or an imidazolinium halide. Said alkyl trimethyl ammonium halide may comprise an average alkyl chain length of C₆ to C₁₆, and said alkyl dimethyl benzyl ammonium halide may comprise an average chain length of C₁₀ to C₁₈. Examples of alkyl trimethyl ammonium halides, according to US2011247966, include alkyl trimethyl ammonium fluoride, alkyl trimethyl ammonium chloride, alkyl trimethyl ammonium bromide, alkyl trimethyl ammonium iodide and alkyl trimethyl ammonium astatide. A specific alkyl trimethyl ammonium halide is n-octyl trimethyl ammonium bromide which was used in Example 1 of US2011247966. The use of said n-octyl trimethyl ammonium bromide as demulsifier in chemical enhanced oil recovery (cEOR) was also reported by Nguyen and Sadeghi (from Nalco Company) in "Selection of the Right Demulsifier for Chemical Enhanced Oil Recovery" in SPE 140860, 2011, pages 1-12 ("SPE" stands for Society of Petroleum Engineers). According to said article, of the alkyl trimethyl ammonium halides tested, said n-octyl trimethyl ammonium bromide performed best, at least for an SP flood (surfactant-polymer flood).

In general, it is important that upon demulsifying oil/water emulsions, the resulting organic phase has a low water content and the resulting water phase has a low oil content. In such way, the organic phase would contain oil that is suitable to be further processed in an oil refinery. Furthermore, the water phase may be re-used, for example for re-injection in cEOR methods. It is a primary object of the present invention to provide a demulsification composition and demulsification process that result in such organic and water phases having low water and oil contents, respectively. Furthermore, it is a secondary object of the present invention to provide a demulsification composition and demulsification process that match the crude oil from oil/water emulsions to be demulsified, in terms of specific crude oil properties. This would enable a pre-selection of a suitable demulsifier based on properties of a specific crude oil to be recovered, and therefore would obviate the need for time-consuming trial-and-error demulsifier screening tests.

### Summary of the invention

Surprisingly it was found that one or more of the above-mentioned objects are achieved by the use, as a demulsifier for demulsifying oil/water emulsions (oil/water emulsions), of a salt of formula (I):

Formula (I) [R¹R²R³R⁴A⁺]ₘ[Xⁿ⁻]

wherein
[R¹R²R³R⁴A⁺] represents a cation;
A is nitrogen or phosphorus;
R¹, R², R³ and R⁴ may be the same or different and each of R¹, R², R³ and R⁴ is a hydrocarbyl group containing 6 to 26 carbon atoms;
[X⁻] represents an anion; and
m = n = 1, 2 or 3.

Accordingly, the present invention relates to a composition for demulsifying an oil/water emulsion, the composition comprising a salt of formula (I) as described above.

Further, the present invention relates to a process for demulsifying an oil/water emulsion, the process comprising contacting the emulsion with a salt of formula (I) as described above.

Still further, the present invention relates to a method of recovering crude oil from a crude oil containing formation, the method comprising:
(a) providing a composition to at least a portion of the crude oil containing formation, wherein the composition comprises water and a surfactant, preferably an anionic surfactant, which anionic surfactant is preferably selected from the group consisting of an internal olefin sulfonate (IOS), an anionic surfactant based on an alkoxylated or non-alkoxylated alcohol having an aliphatic group, and any mixture of these anionic surfactants;
(b) allowing the composition to interact with the crude oil in the crude oil containing formation;
(c) recovering from the crude oil containing formation an emulsion which comprises the crude oil, water and the surfactant; and
(d) subjecting the emulsion recovered in step (c) to a process for demulsifying, the process comprising contacting the emulsion with a salt of formula (I) as described above.

### Brief description of the drawings

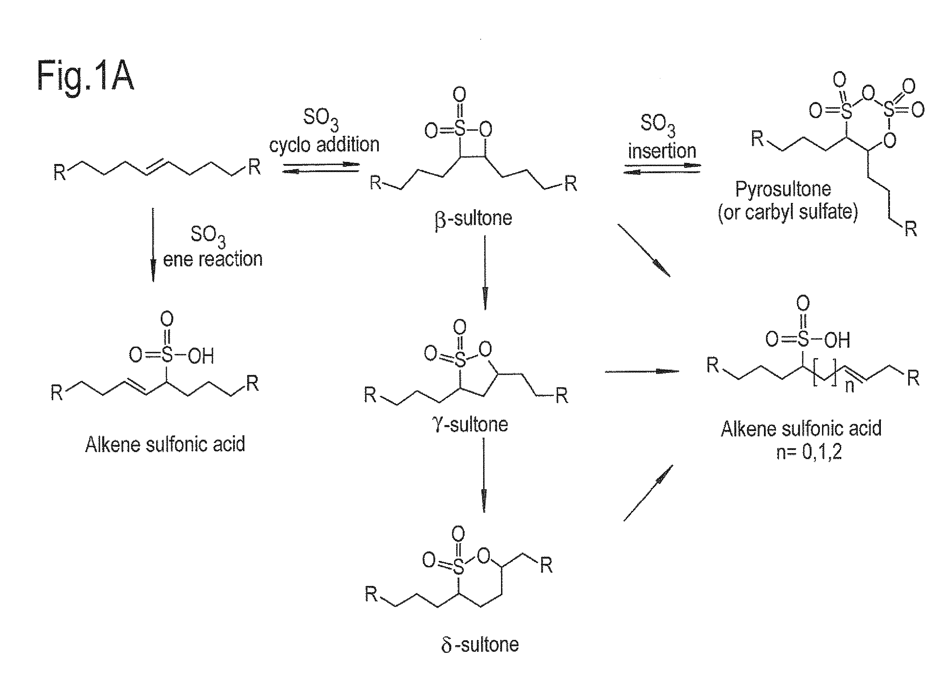

Figure 1A illustrates the reactions of an internal olefin with sulfur trioxide (sulfonating agent) during a sulfonation process.

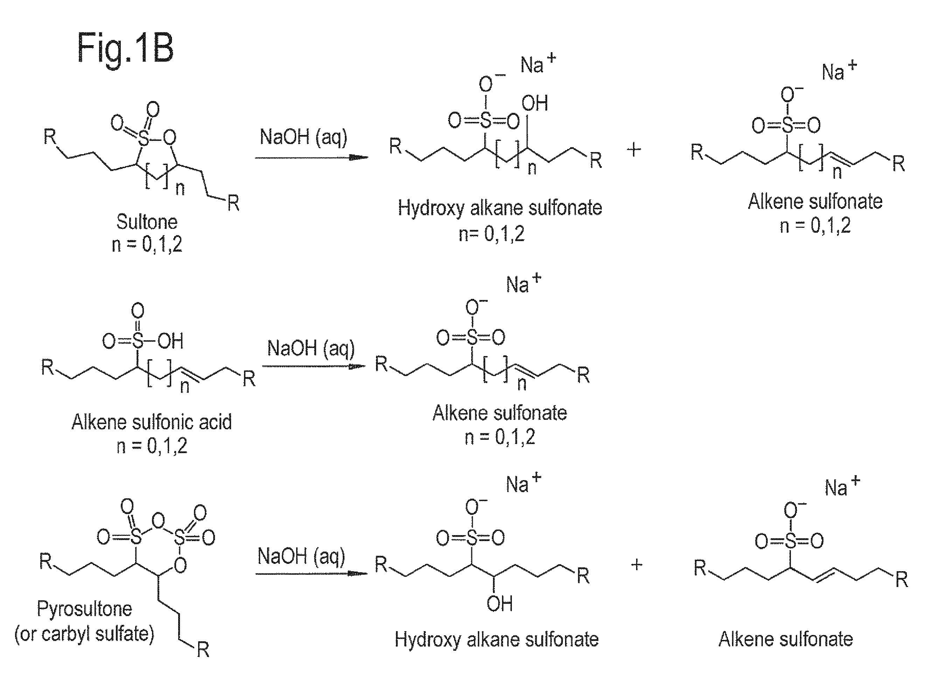

Figure 1B illustrates the subsequent neutralization and hydrolysis process to form an internal olefin sulfonate (IOS).

### Detailed description of the invention

### 1. Composition for demulsifying an oil/water emulsion

In the present invention, the composition for demulsifying an emulsion which comprises oil and water, comprises a salt of formula (I):

Formula (I) [R¹R²R³R⁴A⁺]ₘ[Xⁿ⁻]

[R¹R²R³R⁴A⁺] in the above formula (I) represents the cation of the salt to be used in the present invention. A in said formula is nitrogen or phosphorus, preferably nitrogen.

R¹, R², R³ and R⁴ in the above formula (I) may be the same or different and each of R¹, R², R³ and R⁴ is a hydrocarbyl group containing 6 to 26 carbon atoms, preferably 8 to 24 carbon atoms, more preferably 10 to 22 carbon atoms, more preferably 12 to 20 carbon atoms, for example 12 or 14 carbon atoms. Said hydrocarbyl group may be an alkyl group, cycloalkyl group, alkenyl group or aromatic group, suitably an alkyl group or cycloalkyl group, more suitably an alkyl group. Said hydrocarbyl group may be substituted by another hydrocarbyl group as described hereinbefore or by a substituent which contains one or more heteroatoms, such as a hydroxy group or an alkoxy group. When said hydrocarbyl group is an alkyl group, said alkyl group may be a linear or branched alkyl group containing a number of carbon atoms as described hereinbefore. Preferably, said alkyl group is linear and contains a number of carbon atoms as described hereinbefore. Suitable linear alkyl groups for R¹, R² R³ and R⁴ in the above formula (I) are dodecyl, tetradecyl, hexadecyl, octadecyl and eicosyl, more suitably dodecyl and tetradecyl.

[X⁻] in the above formula (I) represents the anion of the salt to be used in the present invention. The nature of the anion is not essential in the present invention. Said anion may be selected from the group consisting of halide, hydroxide, sulfate, phosphate, sulfonate and carboxylate ions. A suitable sulfonate ion is of formula R-S(=O)₂O⁻ wherein R is a hydrocarbyl group, preferably an alkyl group, preferably containing 1 to 4 carbon atoms, more preferably 1 or 2 carbon atoms. A suitable carboxylate ion is of formula R-C(=O)O⁻ wherein R is a hydrocarbyl group, preferably an alkyl group, preferably containing 1 to 4 carbon atoms, more preferably 1 or 2 carbon atoms. Preferably, said anion is a halide ion, which is preferably selected from fluoride, chloride, bromide and iodide, more preferably chloride and bromide, most preferably bromide.

In the above formula (I) for the salt to be used in the present invention, m = n = 1, 2 or 3, preferably 1. Where m = n = 1, the anion in the salt of the above formula (I) may be a halide, hydroxide, sulfonate or carboxylate as described hereinbefore. Where m = n = 2, said anion may for example be the sulfate anion. Where m = n = 3, said anion may for example be the phosphate anion.

Preferably, the cation from the salt of formula (I) to be used in the present invention is surface-active, whereas the anion from said same salt is preferably not or substantially not surface-active. That is, in the present invention, preferably a cationic surfactant is used in order to achieve the desired demulsification, which cationic surfactant is the cation from the salt of formula (I).

Preferably, the cation from the salt of formula (I) to be used in the present invention is a quaternary ammonium cation of formula [R¹R²R³R⁴N⁺] wherein R¹ to R⁴ are as defined above. Preferably, in said quaternary ammonium cation, each of R¹, R², R³ and R⁴ is a preferably linear alkyl group containing 10 to 22 carbon atoms, more preferably 12 to 20 carbon atoms (e.g. dodecyl and tetradecyl). Said quaternary ammonium cation of formula [R¹R²R³R⁴N⁺] may be combined with any anion as defined above, such as a halide, for example chloride or bromide. Suitable examples for the demulsifier of the present invention are tetra(dodecyl) ammonium bromide and tetra(tetradecyl) ammonium bromide.

In addition to the salt of the above formula (I), the composition of the present invention may comprise a solvent. The solvent may be any solvent which is suitable for dissolving or suspending the salt. The solvent may be water or an alcohol or any combination thereof. Examples of suitable alcohols include glycol, isopropyl alcohol, methanol, butanol and any combination thereof. Preferably, the solvent is water.

### 2. Process for demulsifying an oil/water emulsion

Further, the present invention relates to a process for demulsifying an emulsion which comprises oil and water, the process comprising contacting the emulsion with a salt of the above formula (I). All the embodiments and preferences for the salt of the above formula (I) as described above in relation to the composition of the present invention that comprises said salt, also apply to the salt to be used in the process of the present invention for demulsifying an oil/water emulsion.

In the present process for demulsifying an oil/water emulsion, the emulsion may be contacted with the salt of the above formula (I) in any way, for example by combination, such as mixing, preferably by stirring. Further, the emulsion may be contacted with the salt as such or with the above-described composition of the present invention that comprises said salt. The time period for contacting the emulsion with the salt and achieving the demulsification of that emulsion may vary within wide ranges, and may range from 1 second to 24 hours, suitably 10 seconds to 12 hours, more suitably 1 minute to 2 hours.

Advantageously, oil/water emulsion demulsification using the salt of the above formula (I) results in organic and water phases having low water and oil contents, respectively. In the present invention, the oil/water emulsion may be of any type. It may be an oil-in-water emulsion, where the oil (the dispersed phase) is dispersed in the water (the continuous phase). Alternatively, said oil/water emulsion may be a water-in-oil emulsion, where the water (the dispersed phase) is dispersed in the oil (the continuous phase).

### 2.1 Crude oil properties

Further, advantageously, in the present invention it has appeared that the salt of the above formula (I) may be matched to crude oil from oil/water emulsions to be demulsified, in terms of specific crude oil properties.

Crude oil properties may be described in several ways. First of all, based on their API gravity (American Petroleum Institute gravity), crude oils may be classified as light (high API) or heavy (low API) crude oils. Further, different crude oils comprise varying amounts of saturates, aromatics, resins and asphaltenes. Said 4 components are commonly abbreviated as "SARA". Still further, crude oils comprise varying amounts of acidic and basic components, including naphthenic acids and basic nitrogen compounds. Furthermore, crude oils can be characterized with reference to their cloud points.

In the present invention, a crude oil which has an API gravity ranging from 15 to 40 may be present in the oil/water emulsion.

The above-mentioned "SARA" components in crude oil (that is saturates, aromatics, resins and asphaltenes) can be easily measured using conventional oilfield chemistry methods, including industry ASTM and IP (Institute of Petroleum) methods. Said SARA components can be measured by separation on the basis of their different solubility. First, the asphaltenes may be separated by precipitation using certain alkanes. The remaining soluble SARA components may then be separated by high performance liquid chromatography or column chromatography.

Within the present specification, the term "saturates" means compounds comprising hydrocarbons which contain substantially no carbon-carbon double bonds (C=C bonds) or carbon-carbon triple bonds (C=C bonds). Though hydrocarbons are generally defined as molecules formed primarily of carbon and hydrogen atoms, they may also include other elements, such as halogens, metallic elements, nitrogen, oxygen and/or sulfur. For example, the saturates may comprise paraffins, such as normal-paraffins (linear alkanes), iso-paraffins (branched alkanes) and cyclo-paraffins (cyclic alkanes).

In the present invention, a crude oil which contains an amount of saturates of from 10 to 80 wt.%, based on total crude oil composition, may be present in the oil/water emulsion.

Within the present specification, the term "aromatics" means compounds which contain one or more aromatic rings. Aromatic rings may be conjugated rings of unsaturated carbon-carbon bonds. For example, aromatics may comprise benzene and its derivatives. Benzene derivatives may contain alkyl chains and cycloalkane rings.

In the present invention, a crude oil which contains an amount of aromatics of from 20 to 80 wt.%, based on total crude oil composition, may be present in the oil/water emulsion.

Further, in the present invention, a crude oil which has a weight ratio of saturates to aromatics of from 0.2 to 5.0, more preferably 0.2 to 3.0, may be present in the oil/water emulsion.

Within the present specification, the term "resins" means compounds which are soluble in higher molecular weight normal alkanes, such as n-heptane, and insoluble in lower molecular weight normal alkanes, such as propane.

In the present invention, a crude oil which contains an amount of resins of from 1 to 30 wt.%, preferably 5 to 20 wt.%, based on total crude oil composition, may be present in the oil/water emulsion.

Within the present specification, the term "asphaltenes" means compounds which are a) insoluble in light alkanes such as n-pentane or n-hexane and b) soluble in aromatic solvents such as toluene and benzene. Asphaltenes are not a specific family of chemicals with common functionality and varying molecular weight. They are a continuum of material - generally at the high end in molecular weight, polarity and aromaticity - some of which may separate as an additional solid phase in response to changes in pressure, composition, and/or temperature. Asphaltenes may comprise polycyclic aromatic clusters substituted with varying alkyl side chains with metal species and the molecular weight may be in the 500-2000 g/mole range.

In the present invention, a crude oil which contains an amount of asphaltenes of from 0.001 to 15 wt.%, preferably 0.01 to 12 wt.%, more preferably 0.05 to 10 wt.%, based on total crude oil composition, may be present in the oil/water emulsion.

Further, in the present invention, a crude oil which has a weight ratio of asphaltenes to resins of from 0.0001 to 1.0, more preferably 0.001 to 1.0, more preferably 0.005 to 0.8, most preferably 0.005 to 0.6, may be present in the oil/water emulsion.

Within the present specification, the term "naphthenic acids" means compounds which contain one or more carboxylic acid groups. For example, naphthenic acids may comprise fatty acids. Further, within the present specification, the term "basic nitrogen compounds" means compounds which contain one or more basic nitrogen atoms. Naphthenic acids and basic nitrogen compounds can be measured using conventional analytical techniques, such as potentiometric titrations, infrared spectroscopy and mass spectrometry.

Further, in the present invention, a crude oil which has a cloud point ranging from 1 to 70 °C, preferably 5 to 60 °C, more preferably 10 to 50 °C, more preferably 12 to 40 °C, most preferably 12 to 35 °C, may be present in the oil/water emulsion.

In addition to water and (crude) oil, the oil/water emulsion in the present invention may further comprise a surfactant, an alkaline agent and/or a polymer, as further described below.

### 2.2 Surfactant

Suitably, the oil/water emulsion in the present invention further comprises a surfactant, more preferably an anionic surfactant.

The anionic surfactant may be any one of the anionic surfactants, or a mixture of such surfactants, that are known to effect recovery of crude oil from crude oil containing formations through the action of lowering the interfacial tension (IFT) between the crude oil and water.

Within the present specification, an anionic surfactant may be characterised by its carbon number, number of branches and/or molecular weight. In case reference is made to an average carbon number, average number of branches and/or average molecular weight, this means that the anionic surfactant in question is a mixture of surfactant molecules which differ from each other in terms of carbon number, number of branches and/or molecular weight.

Within the present specification, said average carbon number is determined by multiplying the number of carbon atoms of each surfactant molecule or group within each surfactant molecule by the weight fraction of that molecule or group and then adding the products, resulting in a weight average carbon number. The average carbon number may be determined by NMR analysis.

Within the present specification, said average number of branches is determined by multiplying the number of branches of each surfactant molecule or group within each surfactant molecule by the weight fraction of that molecule or group and then adding the products, resulting in a weight average number of branches. The average number of branches may be determined by NMR analysis. Said average number of branches also takes into account unbranched molecules or groups in addition to branched molecules or groups.

Within the present specification, said average molecular weight is determined by multiplying the molecular weight of each surfactant molecule by the weight fraction of that molecule and then adding the products, resulting in a weight average molecular weight.

A suitable anionic surfactant in the oil/water emulsion in the present invention is selected from the group consisting of:
a) an internal olefin sulfonate (IOS);
b) an anionic surfactant based on an alkoxylated or non-alkoxylated alcohol having an aliphatic group;
c) an alpha-olefin sulfonate (AOS);
d) an alkyl aromatic sulfonate; and
e) any mixture of the foregoing anionic surfactants.

More suitably, said anionic surfactant is selected from the group consisting of a surfactant as mentioned under a) above, a surfactant as mentioned under b) above, and any mixture of said surfactants.

The anionic surfactant mentioned above under d), is an alkyl aromatic sulfonate which is an aromatic compound wherein the aromatic moiety is substituted by both a sulfonate group and an alkyl group. The aromatic moiety may be any aromatic group, such as a phenyl group or a naphthalene group. Suitable examples of such alkyl aromatic sulfonates are linear alkyl benzene sulfonates (LABS) and branched alkyl benzene sulfonates (BABS).

An example of a suitable linear alkyl benzene sulfonate (LABS), as mentioned above, is sodium dodecyl benzene sulfonate. In a LABS, a predominantly linear (for example C₁₀-C₁₃) alkyl group is attached, either via its terminal carbon atom or an internal carbon atom, to a benzene molecule which benzene molecule is also substituted with a sulfonate group on another position, preferably at the para position, and which benzene molecule may be further substituted at the remaining positions, for example with alkyl groups, such as a methyl group. Examples of suitable LABS that can be used as anionic surfactant are disclosed in US20090163669.

The anionic surfactant mentioned above under b), may be an anionic surfactant based on an alkoxylated or non-alkoxylated, preferably alkoxylated, alcohol having an aliphatic group, which group has an average carbon number of from 8 to 26 and an average number of branches of from 0.5 to 2.5, and having an average of at least 0.5 mole of alkylene oxide groups per mole of alcohol if the alcohol is alkoxylated. Said alcohol may be primary or secondary, preferably primary. Said anionic surfactant may be of formula (II) :

Formula (II) [R-O-[R'-O]ₓ-A^{m-}] [Mⁿ⁺]ₒ

wherein R is the aliphatic group originating from the alcohol, R'-O is an alkylene oxide group originating from the alkylene oxide, x is 0 or at least 0.5, preferably at least 0.5, A is a negatively charged group, M is a counter cation and the product of n and o (n*o) equals m.

In above exemplary formula (II), m and n are integers. m may be 1, 2 or 3. Further, o may be any number which ensures that the anionic surfactant is electrically neutral. That is to say, the product of n and o (n*o) should equal m. o may be a number in the range of from 0.5 to 3.

The counter cation, denoted as Mⁿ⁺ in above exemplary formula (II), may be an organic cation, such as a nitrogen containing cation, for example an ammonium cation which may be unsubstituted or substituted. Further, the counter cation may be a metal cation, such as an alkali metal cation or an alkaline earth metal cation. Preferably, such alkali metal cation is lithium cation, sodium cation or potassium cation. Further, preferably, such alkaline earth metal cation is magnesium cation or calcium cation.

The alkylene oxide groups in above exemplary formula (II) may comprise any alkylene oxide groups. For example, said alkylene oxide groups may comprise ethylene oxide groups, propylene oxide groups and butylene oxide groups or a mixture thereof, such as a mixture of ethylene oxide and propylene oxide groups. In case of a mixture of ethylene oxide and propylene oxide groups, the mixture may be random or blockwise.

The negatively charged group, denoted as A^{m-} in above exemplary formula (II), may be any negatively charged group. Said negatively charged group is preferably a group comprising the -SO₃⁻ moiety (either sulfate or sulfonate). Further, said negatively charged group may be a group comprising the -C(=O)O⁻ moiety (carboxylate).

The anionic surfactant mentioned above under a) is an internal olefin sulfonate (IOS). An IOS comprises a mixture of IOS molecules. That is to say, within the present specification, "IOS" or "internal olefin sulfonate" as such refers to a mixture of IOS molecules whereas "IOS molecule" or "internal olefin sulfonate molecule" refers to one of the components from such IOS.

The average carbon number for the IOS is not essential and may vary within wide ranges, such as from 5 to 40, suitably 10 to 35, more suitably 15 to 30.

Further, the average number of branches for the IOS is neither essential and may also vary within wide ranges. Suitably, said average number of branches is at least 0.6, more suitably from 0.6 to 3.0, more suitably from 0.6 to 2.8, most suitably from 0.7 to 2.6.

The olefins used in making said IOS may thus be branched and/or unbranched. Therefore, the resulting IOS may be branched. The IOS may be partially or completely branched or the IOS may be partially or completely unbranched (that is to say linear, containing no branch).

Still further, the average molecular weight for the IOS is neither essential and may also vary within wide ranges, such as from 100 to 500, suitably 150 to 450, more suitably 200 to 400 g/mole.

Suitable IOS include those from the ENORDET^{™} O series of surfactants commercially available from Shell Chemicals Company. Suitable IOS include one or more IOS selected from the group consisting of C₁₅₋₁₈ IOS, C₁₉₋₂₃ IOS, C₂₀₋₂₄ IOS and C₂₄₋₂₈ IOS, as further described below.

"C₁₅₋₁₈ internal olefin sulfonate" (C₁₅₋₁₈ IOS) as used herein means a mixture of internal olefin sulfonate molecules wherein the mixture has an average carbon number of from 16 to 17 and at least 50% by weight, preferably at least 65% by weight, more preferably at least 75% by weight, most preferably at least 90% by weight, of the internal olefin sulfonate molecules in the mixture contain from 15 to 18 carbon atoms.

"C₁₉₋₂₃ internal olefin sulfonate" (C₁₉₋₂₃ IOS) as used herein means a mixture of internal olefin sulfonate molecules wherein the mixture has an average carbon number of from 21 to 23 and at least 50% by weight, preferably at least 60% by weight, of the internal olefin sulfonate molecules in the mixture contain from 19 to 23 carbon atoms.

"C₂₀₋₂₄ internal olefin sulfonate" (C₂₀₋₂₄ IOS) as used herein means a mixture of internal olefin sulfonate molecules wherein the mixture has an average carbon number of from 20 to 23 and at least 50% by weight, preferably at least 65% by weight, more preferably at least 75% by weight, most preferably at least 90% by weight, of the internal olefin sulfonate molecules in the mixture contain from 20 to 24 carbon atoms.

"C₂₄₋₂₈ internal olefin sulfonate" (C₂₄₋₂₈ IOS) as used herein means a blend of internal olefin sulfonate molecules wherein the blend has an average carbon number of from 24.5 to 27 and at least 40% by weight, preferably at least 45% by weight, of the internal olefin sulfonate molecules in the blend contain from 24 to 28 carbon atoms.

IOS manufacture comprises (a) sulfonation and (b) neutralisation and hydrolysis (Adami, "Production of linear alkylbenzene sulphonate and alpha-olefin sulphonates", Surfactant Science Series, volume 142, chapter 5, page 83). As appears from Figures 1A and 1B, an IOS comprises a range of different molecules, which may differ from one another in terms of carbon number, number of branches and number and distribution of functional groups such as sulfonate and hydroxyl groups. An IOS comprises both hydroxyalkane sulfonate molecules and alkene sulfonate molecules and possibly also di-sulfonate molecules. Hydroxyalkane sulfonate molecules and alkene sulfonate molecules are shown in Figure 1B. Di-sulfonate molecules (not shown in Figure 1B) originate from a further sulfonation of for example an alkene sulfonic acid as shown in Figure 1A.

The IOS, if present in the oil/water emulsion, may comprise at least 30% hydroxyalkane sulfonate molecules, up to 70% alkene sulfonate molecules and up to 10% di-sulfonate molecules. Suitably, the IOS comprises from 30% to 90% hydroxyalkane sulfonate molecules, from 10% to 70% alkene sulfonate molecules and from 0% to 10% di-sulfonate molecules. Beneficially, the IOS comprises from 40% to 85% hydroxyalkane sulfonate molecules, from 15% to 60% alkene sulfonate molecules and from less than 1% to 5% di-sulfonate molecules. The composition of the IOS may be measured using a liquid chromatography / mass spectrometry (LC-MS) technique. An IOS molecule is made from an internal olefin molecule whose double bond is located anywhere along the carbon chain except at a terminal carbon atom. Internal olefin molecules may be made by double bond isomerisation of alpha-olefin molecules whose double bond is located at a terminal position. Generally, such isomerisation results in a mixture of internal olefin molecules whose double bonds are located at different internal positions. The mixture that results from such preparation may also comprise a minor amount of alpha-olefins, for example up to 5%, suitably up to 3%.

### 2.3 Alkaline agent

Suitably, the oil/water emulsion in the present invention further comprises an alkaline agent. Within the present specification, an "alkaline agent" may refer to a basic, ionic salt of an alkali metal or alkaline earth metal, preferably an alkali metal, which salt is a base that dissolves in water yielding a solution having a pH greater than 7. Alkaline agents are also commonly referred to as alkalis or alkali agents.

Any alkaline agent known to the skilled person may be used. Suitable examples of alkaline agents are ammonia (ammonium hydroxide) and ethanolamines (monoethanolamine, diethanolamine, triethanolamine). A preferred alkaline agent is an alkaline agent which is selected from the group consisting of alkali metal carbonate salts, alkali metal bicarbonate salts, alkali metal hydroxide salts, alkali metal silicate salts, alkali metal phosphate salts and alkali metal borate salts. The alkali metal counter cation in said salts may be sodium, potassium, lithium or cesium. More preferably, said counter cation is sodium or potassium, most preferably sodium.

Within the present specification, "silicate" covers orthosilicates, pyrosilicates, polysilicates and metasilicates. Preferably, the silicate is an orthosilicate, such as sodium silicate, or a metasilicate, such as sodium metasilicate.

Within the present specification, "phosphate" covers orthophosphates, pyrophosphates, polyphosphates and metaphosphates. Preferably, the phosphate is a polyphosphate. Suitable examples of polyphosphates are triphosphates and higher phosphates, such as pentasodium triphosphate.

As alkali metal borate salts, alkali metal metaborate salts are preferred, such as lithium or potassium metaborate (LiBO₂ or KBO₂, respectively).

More preferably, the alkaline agent is an alkaline agent which is selected from the group consisting of alkali metal carbonate salts, alkali metal bicarbonate salts and alkali metal hydroxide salts. Suitable examples of alkali metal hydroxide salts are sodium hydroxide and potassium hydroxide. Even more preferably, the alkaline agent is an alkali metal carbonate salt or an alkali metal bicarbonate salt. Suitable examples of alkali metal bicarbonate salts are sodium bicarbonate and potassium bicarbonate. Most preferably, the alkaline agent is an alkali metal carbonate salt, suitably sodium carbonate or potassium carbonate, more suitably sodium carbonate.

### 2.4 Polymer

Suitably, the oil/water emulsion in the present invention further comprises a polymer, in particular a viscosity increasing polymer. Suitable polymers are described in US6427268, US6439308, US5654261, US5284206, US5199490 and US5103909, and also in "Viscosity Study of Salt Tolerant Polymers", Rashidi et al., Journal of Applied Polymer Science, volume 117, pages 1551-1557, 2010, the disclosures of all of which are incorporated herein by reference.

Suitable commercially available polymers include Flopaam^{®} manufactured by SNF Floerger, CIBA^{®} ALCOFLOOD^{®} manufactured by Ciba Specialty Additives (Tarrytown, New York), Tramfloc^{®} manufactured by Tramfloc Inc. (Temple, Arizona) and HE^{®} polymers manufactured by Chevron Phillips Chemical Co. (The Woodlands, Texas). A specific suitable polymer commercially available at SNF Floerger is Flopaam^{®} 3630 which is a partially hydrolysed polyacrylamide.

The nature of the polymer is not relevant, as long as the polymer can increase viscosity. That is, the molecular weight of the polymer should be sufficiently high to increase viscosity. Suitably, the molecular weight of the polymer is at least 1 million Dalton, more suitably at least 2 million Dalton, most suitably at least 4 million Dalton. The maximum for the molecular weight of the polymer is not essential. Suitably, the molecular weight of the polymer is at most 30 million Dalton, more suitably at most 25 million Dalton.

Further, the polymer may be a homopolymer, a copolymer or a terpolymer. Still further, the polymer may be a synthetic polymer or a biopolymer or a derivative of a biopolymer. Examples of suitable biopolymers or derivatives of biopolymers include xanthan gum, guar gum and carboxymethyl cellulose.

A suitable monomer for the polymer, suitably a synthetic polymer, is an ethylenically unsaturated monomer of formula R¹R²C=CR³R⁴, wherein at least one of the R¹, R², R³ and R⁴ substituents is a substituent which contains a moiety selected from the group consisting of -C(=O)NH₂, -C(=O)OH, - C(=O)OR wherein R is a branched or linear C₆-C₁₈ alkyl group, -OH, pyrrolidone and -SO₃H (sulfonic acid), and the remaining substituent(s), if any, is (are) selected from the group consisting of hydrogen and alkyl, preferably C₁-C₄ alkyl, more preferably methyl. Most preferably, said remaining substituent(s), if any, is (are) hydrogen. Suitably, a polymer is used that is made from such ethylenically unsaturated monomer.

Suitable examples of the ethylenically unsaturated monomer as defined above, are acrylamide, acrylic acid, lauryl acrylate, vinyl alcohol, vinylpyrrolidone, and styrene sulfonic acid and 2-acrylamido-2-methylpropane sulfonic acid. Suitable examples of ethylenic homopolymers that are made from such ethylenically unsaturated monomers are polyacrylamide, polyacrylate, polylauryl acrylate, polyvinyl alcohol, polyvinylpyrrolidone, and polystyrene sulfonate and poly(2-acrylamido-2-methylpropane sulfonate). For these polymers, the counter cation for the -C(=O)O⁻ moiety (in the case of polyacrylate) and for the sulfonate moiety may be an alkali metal cation, such as a sodium ion, or an ammonium ion.

As mentioned above, copolymers or terpolymers may also be used. Examples of suitable ethylenic copolymers include copolymers of acrylic acid and acrylamide, acrylic acid and lauryl acrylate, and lauryl acrylate and acrylamide.

Preferably, the polymer is a polyacrylamide, more preferably a partially hydrolysed polyacrylamide. A partially hydrolysed polyacrylamide contains repeating units of both - [CH₂-CHC(=O)NH₂]- and -[CH₂-CHC(=O)O⁻M⁺]- wherein M⁺ may be an alkali metal cation, such as a sodium ion, or an ammonium ion. The extent of hydrolysis is not essential and may vary within wide ranges. For example, 1 to 99 mole%, or 5 to 95 mole%, or 10 to 90 mole%, suitably 15 to 40 mole%, more suitably 20 to 35 mole%, of the polyacrylamide may be hydrolysed.

### 3. Method of recovering crude oil from a crude oil containing formation

Still further, the present invention relates to a method of recovering crude oil from a crude oil containing formation, the method comprising:
(a) providing a composition to at least a portion of the crude oil containing formation, wherein the composition comprises water and a surfactant, preferably an anionic surfactant, which anionic surfactant is preferably selected from the group consisting of an internal olefin sulfonate (IOS), an anionic surfactant based on an alkoxylated or non-alkoxylated alcohol having an aliphatic group, and any mixture of these anionic surfactants;
(b) allowing the composition to interact with the crude oil in the crude oil containing formation;
(c) recovering from the crude oil containing formation an emulsion which comprises the crude oil, water and the surfactant; and
(d) subjecting the emulsion recovered in step (c) to a process for demulsifying, the process comprising contacting the emulsion with a salt of formula (I) as described above.

In the method of the present invention of recovering crude oil from a crude oil containing formation, said crude oil is allowed to interact with a composition which comprises water and a surfactant. All the embodiments and preferences for the surfactant as described above in relation to the process of the present invention for demulsifying an oil/water emulsion, the process comprising contacting the emulsion with the salt of the above formula (I), also apply to the surfactant to be used in the method of the present invention of recovering crude oil from a crude oil containing formation.

In addition to water and surfactant, the composition to be used in the method of the present invention of recovering crude oil from a crude oil containing formation may further comprise an alkaline agent and/or a polymer. All the embodiments and preferences for the alkaline agent and polymer as described above in relation to the process of the present invention for demulsifying an oil/water emulsion, the process comprising contacting the emulsion with the salt of the above formula (I), also apply to the alkaline agent and polymer that may be present in the composition to be used in the method of the present invention of recovering crude oil from a crude oil containing formation.

Upon recovering an emulsion which comprises the crude oil, water and the surfactant from the crude oil containing formation, the recovered oil/water emulsion is subjected to a process for demulsifying, the process comprising contacting the emulsion with the salt of the above formula (I). All the embodiments and preferences for the salt of the above formula (I) as described above in relation to the composition of the present invention that comprises said salt, also apply to the salt to be used in the method of the present invention of recovering crude oil from a crude oil containing formation.

## Claims

1. Composition for demulsifying an emulsion which comprises oil and water, the composition comprising a salt of formula (I) :
Formula (I) [R¹R²R³R⁴A⁺]ₘ[Xⁿ⁻]
wherein
[R¹R²R³R⁴A⁺] represents a cation;
A is nitrogen or phosphorus;
R¹, R², R³ and R⁴ may be the same or different and each of R¹, R², R³ and R⁴ is a hydrocarbyl group containing 6 to 26 carbon atoms;
[X⁻] represents an anion; and
m = n = 1, 2 or 3.

2. Composition according to claim 1, wherein each of R¹, R², R³ and R⁴ is a hydrocarbyl group containing 10 to 22 carbon atoms, preferably 12 to 20 carbon atoms.

3. Composition according to claim 2, wherein each of R¹, R², R³ and R⁴ is selected from dodecyl, tetradecyl, hexadecyl, octadecyl and eicosyl, preferably dodecyl and tetradecyl.

4. Composition according to claim 3, wherein [R¹R²R³R⁴A⁺] is tetra(dodecyl) ammonium cation or tetra(tetradecyl) ammonium cation.

5. Composition according to any one of the preceding claims, wherein the emulsion which comprises oil and water further comprises a surfactant, preferably an anionic surfactant, which anionic surfactant is preferably selected from the group consisting of: a) an internal olefin sulfonate (IOS); b) an anionic surfactant based on an alkoxylated or non-alkoxylated alcohol having an aliphatic group; and any mixture of these anionic surfactants.

6. Process for demulsifying an emulsion which comprises oil and water, the process comprising contacting the emulsion with a salt of formula (I):
Formula (I) [R¹R²R³R⁴A⁺]ₘ[Xⁿ⁻]
wherein
[R¹R²R³R⁴A⁺] represents a cation;
A is nitrogen or phosphorus;
R¹, R², R³ and R⁴ may be the same or different and each of R¹, R², R³ and R⁴ is a hydrocarbyl group containing 6 to 26 carbon atoms;
[X⁻] represents an anion; and
m = n = 1, 2 or 3.

7. Process according to claim 6, wherein each of R¹, R², R³ and R⁴ is a hydrocarbyl group containing 10 to 22 carbon atoms, preferably 12 to 20 carbon atoms.

8. Process according to claim 7, wherein each of R¹, R², R³ and R⁴ is selected from dodecyl, tetradecyl, hexadecyl, octadecyl and eicosyl, preferably dodecyl and tetradecyl.

9. Process according to claim 8, wherein [R¹R²R³R⁴A⁺] is tetra(dodecyl) ammonium cation or tetra(tetradecyl) ammonium cation.

10. Process according to any one of claims 6-9, wherein the emulsion which comprises oil and water further comprises a surfactant, preferably an anionic surfactant, which anionic surfactant is preferably selected from the group consisting of: a) an internal olefin sulfonate (IOS); b) an anionic surfactant based on an alkoxylated or non-alkoxylated alcohol having an aliphatic group; and any mixture of these anionic surfactants.

11. Method of recovering crude oil from a crude oil containing formation, the method comprising:
(a) providing a composition to at least a portion of the crude oil containing formation, wherein the composition comprises water and a surfactant, preferably an anionic surfactant, which anionic surfactant is preferably selected from the group consisting of: a) an internal olefin sulfonate (IOS), b) an anionic surfactant based on an alkoxylated or non-alkoxylated alcohol having an aliphatic group, and any mixture of these anionic surfactants;
(b) allowing the composition to interact with the crude oil in the crude oil containing formation;
(c) recovering from the crude oil containing formation an emulsion which comprises the crude oil, water and the surfactant; and
(d) subjecting the emulsion recovered in step (c) to a process for demulsifying, the process comprising contacting the emulsion with a salt of formula (I):
Formula (I) [R¹R²R³R⁴A⁺]ₘ[Xⁿ⁻]
wherein
[R¹R²R³R⁴A⁺] represents a cation;
A is nitrogen or phosphorus;
R¹, R², R³ and R⁴ may be the same or different and each of R¹, R², R³ and R⁴ is a hydrocarbyl group containing 6 to 26 carbon atoms;
[X⁻] represents an anion; and
m = n = 1, 2 or 3.

12. Method according to claim 11, wherein each of R¹, R², R³ and R⁴ is a hydrocarbyl group containing 10 to 22 carbon atoms, preferably 12 to 20 carbon atoms.

13. Method according to claim 12, wherein each of R¹, R², R³ and R⁴ is selected from dodecyl, tetradecyl, hexadecyl, octadecyl and eicosyl, preferably dodecyl and tetradecyl.

14. Method according to claim 13, wherein [R¹R²R³R⁴A⁺] is tetra(dodecyl) ammonium cation or tetra(tetradecyl) ammonium cation.
